# EUROPEAN PATENT APPLICATION

(11) **EP 1 296 255 A1**
(43) Date of publication of application: **26.03.2003**
(21) Application number: 00922941.0
(22) Date of filing: 01.05.2000
(51) Int. Cl.: G06F 17/60

(54) **QUALIFIED INFORMATION PROVIDING METHOD AND SYSTEM AND STORAGE MEDIUM STORING QUALIFIED INFORMATION PROVIDING PROGRAM AND QUALIFYING SERVER**

(71) Applicant: Nippon Telegraph and Telephone Corporation, Tokyo 100-8116 (JP)
(72) Inventor: MATSUMOTO, Takashi,c/o NTT Intell.Property Center, Musashino-shi, Tokyo 180-8585 (JP); SASAKI, Hajime,c/o NTT Intell.Property Center, Musashino-shi, Tokyo 185-8585 (JP)
(74) Representative: Rees, Alexander Ellison
(86) International application number: JP0002883
(87) International publication number: WO01084395

(57) **Abstract**

A certification information providing system is provided, in which a third party certification authority certifies information provided by an information provider over a network that is used by an indefinite number of users. Certification information is provided to a user. The system includes a terminal including: request detection means for detecting a request operation by the user; request issuing means for sending a providing information request or a certification request on the basis of operation information detected by the request detection means; information obtaining means for obtaining providing information corresponding to the providing information request or a certification information providing program corresponding to the certification request; and display control means for displaying the providing information when the information obtaining means obtains the providing information, and for displaying certification information if newest display history information and certification object information included in the certification information providing program are the same when the information obtaining means obtains the certification information providing program. The certification information providing system further includes: an information providing server for providing information corresponding to the providing information request to the terminal; and a certification server for providing a certification information providing program corresponding to the certification request to the terminal.

## Description

### TECHNICAL FIELD

The present invention relates to a certification information providing method, a system, a recording medium storing a certification information providing program, and a certification server. More particularly, the present invention relates to a certification information providing method, a system, a recording medium storing a certification information providing program, and a certification server in which a third party certification authority certifies information provided by an information provider over a network that is used by an indefinite number of users, and certification information is provided to the users so that a sense of security is provided to the users.

### BACKGROUND ART

In a conventional certification information providing system, when a third party certification authority certifies information provided by an information provider over a network that is used by an indefinite number of users, and certification information is provided to the users so that a sense of security is provided to the users, a technology is used in which a mark for requesting certification from a third party certification authority is attached to information provided by the information provider. The third party certification authority stores certification information corresponding to the mark beforehand, and the user sends a certification request to the third party certification authority using the mark provided by the information provider, and the user obtains the stored certification information.

However, when the above-mentioned conventional technology is used in a system in which third party certification authority certifies information provided by an information provider over a network that is used by an indefinite number of users, and certification information is provided to the users so that a sense of security is provided to the users, a malicious information provider may provide certification information of a valid information provider to a user by illegally copying the mark for performing a certification request from a third party certification authority. Therefore, if a malicious information provider obtains a mark for certification request of a valid information provider, and the malicious information provider presents the certification information of the valid information provider to a user, information, provided by the malicious information provider, that is not certified by the third party certification authority looks as if the information is certified, so that there occurs a problem that a sense of security cannot be provided.

### DISCLOSURE OF THE INVENTION

The present invention is contrived in light of the above-mentioned situation. An object of the present invention is to provide a certification information providing method, a system, a recording medium storing a certification information providing program, and a certification server for verifying whether a malicious information provider abuses certification information of a valid information provider and for providing a true sense of security by presenting certification information only for a valid information provider.

To achieve the above-mentioned object, the present invention is configured in the following way.

The present invention is a certification information providing method in which a third party certification authority certifies information provided by an information provider over a network that is used by an indefinite number of users, and certification information is provided to a user, the method including the steps of:
a terminal detecting a request operation by the user;
sending a providing information request or a certification request on the basis of detected operation information;
obtaining providing information from an information providing server that receives the providing information request, or obtaining a certification information providing program from a certification server that receives the certification request; and
displaying the providing information or information on the basis of the certification information providing program.

In the certification information providing method, the terminal receives a providing information request from the user;
the terminal sends the providing information request to the information providing server of an information provider;
the information providing server searches a providing information memory means for information on the basis of the providing information request, and sends presence or absence of the information corresponding to the providing information request, location information of the information and the providing information to the terminal;
the terminal displays the providing information if the terminal receives the providing information from the information providing server, and the terminal indicates that there is no information to be provided if the terminal does not receive the providing information, and the terminal stores location information of the providing information in display history information;
the terminal receives a certification request from the providing information from the user;
the terminal sends the certification request to the certification server;
the certification server searches a certification information memory means for a certification information providing program on the basis of the certification request, and the certification server sends presence or absence of the certification information providing program corresponding to the certification request and location information of the certification information and the certification information providing program if it exists to the terminal, and
the terminal obtains the certification information providing program from the certification server, and when the certification object information included in the certification information providing program and the newest display history information are the same, the terminal displays the certification information, and, when they are not the same or when the certification information providing program does not exist, the terminal displays not-certified information as a certification information display result.

In the certification information providing method, the certification server:
stores, beforehand, information used for generating the certification information providing program;
generates the certification information providing program by searching the information used for generating the certification information providing program for information corresponding to the certification request; and
sends the certification information providing program to the terminal.

In addition, the present invention is a certification information providing system in which a third party certification authority certifies information provided by an information provider over a network that is used by an indefinite number of users, and certification information is provided to a user, the system comprising:
a terminal comprising:
   request detection means for detecting a request operation by the user;
   request issuing means for sending a providing information request or a certification request on the basis of operation information detected by the request detection means;
   information obtaining means for obtaining providing information corresponding to the providing information request or a certification information providing program corresponding to the certification request; and
   display control means for displaying the providing information when the information obtaining means obtains the providing information, and for displaying certification information if newest display history information and certification object information included in the certification information providing program are the same when the information obtaining means obtains the certification information providing program, wherein the newest display history information is extracted from display history information that is stored when providing information and certification information are displayed;
   the certification information providing system further comprising:
      an information providing server for providing information corresponding to the certification request to the terminal; and
      a certification server for providing a certification information providing program corresponding to the certification request to the terminal.

In the certification information providing system, the display control means includes:
display history storing means for displaying the providing information and the certification information, and storing information indicating location of the information in display history information; and
determining means for, when the certification information providing program is obtained, displaying certification information indicating that certification object is certified only when a certification information presence identifier is "present" and newest display history information stored in the display history storing means is the same as the certification object information included in the certification information providing program.

In the certification information providing system, the certification server includes:
program generation information storing means for storing, beforehand, information used for generating the certification information providing program;
program generation means for generating the certification information providing program by searching the program generation information storing means for information corresponding to the certification request; and
program sending means for sending the certification information providing program to the terminal.

In addition, the present invention is a computer readable medium storing program code to be installed on a terminal for providing certification information to a user in which a third party certification authority certifies information provided by an information provider over a network that is used by an indefinite number of users, the computer readable medium including:
request detection program code means for detecting a request operation by the user;
request issuing program code means for sending a providing information request or a certification request on the basis of operation information detected by the request detection program code means;
information obtaining program code means for obtaining providing information corresponding to the providing information request or a certification information providing program corresponding to the certification request; and
display control program code means for displaying the providing information when the information obtaining means obtains the providing information, and for displaying certification information if newest display history information and certification object information included in the certification information providing program are the same when the information obtaining means obtains the certification information providing program, wherein the newest display history information is extracted from display history information that is stored when providing information and certification information are displayed.

In the computer readable medium, the display control program code means includes:
display history storing program code means for displaying the providing information and the certification information, and storing display history information corresponding to the information in memory means; and
determining program code means for, when the certification information providing program is obtained, displaying certification information indicating that certification object is certified only when newest display history information stored in the memory means is the same as the certification object information included in the certification information providing program.

The present invention is a computer readable medium storing program code to be installed on a certification server for providing certification information to a user in which a third party certification authority certifies information provided by an information provider over a network that is used by an indefinite number of users, the computer readable medium including:
program code means for searching for a certification information providing program from certification information providing programs stored beforehand when the certification server receives a certification request from a terminal of a user;
certification information sending program code means for sending the searched certification information providing program to the terminal.

The computer readable medium further includes:
program generation information storing program code means for storing information used for generating the certification information providing program used for certifying providing information in memory means beforehand;
program generation program code means for generating the certification information providing program by searching the information used for generating the certification information providing program stored in the memory means for information corresponding to the certification request; and
program sending program code means for sending the certification information providing program to the terminal.

The present invention is a certification server for verifying whether information provided by an information provider via a network is valid, the certification server comprising:
certification information request receiving means for receiving a certification request via the network; and
certification information sending means for searching certification information memory means for a certification information providing program on the basis of the certification request, and sending the certification information providing program to the network when the certification information providing program exists.

Accordingly, the terminal that receives the providing information request from a user obtains information corresponding to the request from the information providing server, and displays the information to the user. In addition, the terminal stores information indicating the location of the information in display history information, and issues a certification request for the providing information to the certification server. Then, the terminal receives the certification information providing program from the certification server, and compares certification object information in the certification information providing program with newest history information extracted from the display history information. When they are the same, the terminal can displays the certification information to the user. Thus, the certification information is displayed only when the newest display history information and the certification object information are the same, wherein the newest display history information is extracted from display history information in the terminal, and certification object information is in the certification information providing program sent from the certification server. Therefore, fraud can be prevented. Thus, a malicious information provider can be prevented from presenting certification information of a valid information provider by using a mark provided by the information provider.

### BRIEF DESCRIPTION OF THE DRAWINGS

Fig.1 is a figure for explaining the principle of the present invention;
Fig.2 shows a principle block diagram of the present invention;
Fig.3 shows a configuration of a certification information providing system of the present invention;
Fig.4 shows a sequence chart for explaining operations of the certification information providing system of the present invention;
Fig.5 shows examples of a providing information location identifier and a providing information data packet according to the first embodiment of the present invention;
Fig.6 shows examples of a certification information location identifier and a certification information data packet according to the first embodiment of the present invention;
Fig.7 shows an example of relationships between locations of providing information and the providing information;
Fig.8 shows an example of a sending message when the providing information presence identifier indicates "present" in the first embodiment of the present invention;
Fig.9 shows an example of relationships between locations of certification information and certification information providing programs;
Fig.10 shows an example of a sending message when the providing information presence identifier indicates "absent" in the first embodiment of the present invention;
Fig.11 shows an example of a sending message when the certification information presence identifier indicates "absent" in the first embodiment of the present invention;
Fig.12 is an algorithm of the certification information providing program according to the first embodiment of the present invention;
Fig.13 shows an example of the certification object identifier of the first embodiment of the present invention;
Fig.14 shows an example of relationships between order of display histories and display history information according to the first embodiment of the present invention;
Fig.15 is an example of a sending message in the case when the certification information presence identifier is "present", and the certification object identifier and the newest history information are the same according to the first embodiment of the present invention;
Fig.16 is an example of a sending message in the case when the certification information presence identifier is "present", and the certification object identifier and the newest history information are not the same according to the first embodiment of the present invention;
Fig.17 shows a configuration of the certification information providing system according to the second embodiment of the present invention;
Fig.18 shows an example of relationships of locations of certification information and the certification object information according to the second embodiment of the present invention;
Fig.19 shows an algorithm of the certification information providing program generation part of the second embodiment of the present invention;
Fig.20 shows an example of a certification information providing program template according to the second embodiment of the present invention;
Fig.21 shows an example of a certification information template according to the second embodiment of the present invention;
Fig.22 is an example of a sending message in the case when the certification information presence identifier is "present", and the certification object identifier and the newest history information are the same according to the second embodiment of the present invention;
Fig.23 shows a configuration example of a computer.

### PREFERRED EMBODIMENTS FOR CARRYING OUT THE INVENTION

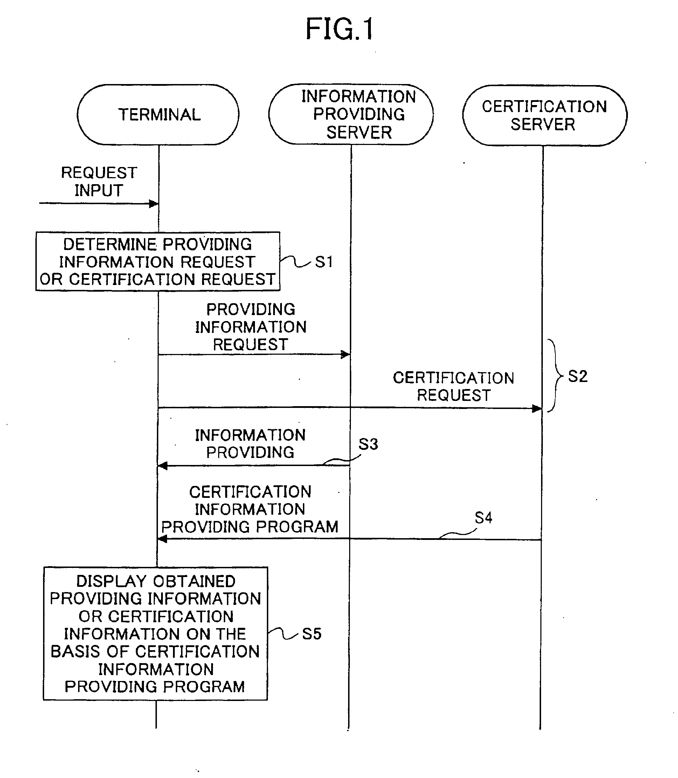

Fig.1 is a figure for explaining the principle of the present invention.

In the certification information providing method of the present invention, a terminal detects a request operation by a user (step 1), the terminal originates providing information request or certification request on the basis of the detected operation information (step 2), the terminal obtains provided information from an information providing server that receives the providing information request (step 3), or, the terminal receives a certification information providing program from a certification server that receives the certification request (step 4), and the terminal presents the obtained provided information or information based on the certification information providing program to the user(step 5).

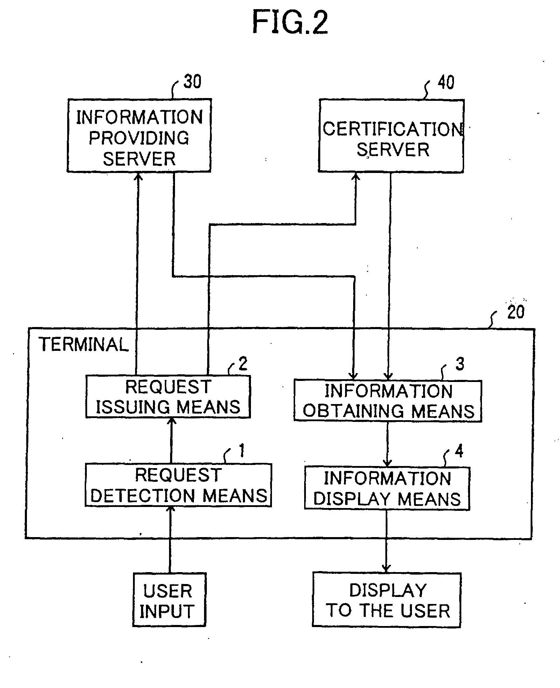

Fig.2 shows a principle block diagram of the present invention.

The certification information providing system of the present invention includes a terminal 20, an information providing server 30 that provides information corresponding to the providing information request from the terminal 20, and a certification server 40 that provides a certification information providing program corresponding to the certification request from the terminal 20. The terminal 20 includes a request detection means 1 for detecting an operation requested by a user, request issuing means 2 for originating a providing information request or certification request on the basis of the operation information detected by the request detection means 1, information obtaining means 3 for obtaining provided information corresponding to the providing request or the certification information providing program corresponding to the certification request, and a display control means 4. The display control means 4 displays the provided information when the information providing means 3 obtains the provided information, and, when the information obtaining means 3 obtains a certification information providing program, the display control means 4 presents the certification information to the user, when the newest display history information and the certification object information are the same, wherein the newest display history information is extracted from display history information stored when the provided information is obtained, and the certification object information is included in the certification information providing program.

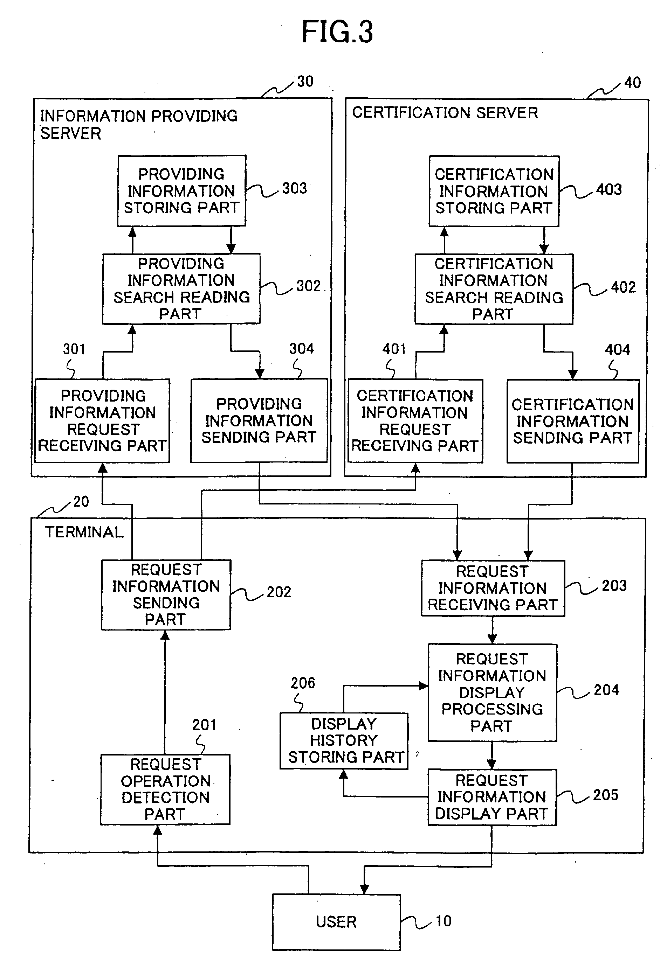

Fig.3 shows a detailed configuration of the certification information providing system of the present invention.

The system shown in the figure includes a user 10 requesting an operation, a terminal 20 operated by the user 10, an information providing server 30 that stores information provided by an information provider, and a certification server 40 that stores a certification information providing program that displays certification information provided by the third party certification authority.

The terminal 20 includes a request operation detection part 201 for detecting an operation requested by the user 10, a request information sending part 202 sending a signal to the information providing server 30 or to the certification server 40, a request information receiving part 203 for receiving a signal from the information providing server 30 or the certification server 40, a request information display processing part 204 for receiving a signal from the request information receiving part 203 and for processing the display on the basis of the signal, a request information display part 205 for performing display, and a display history storing part 206 for receiving a signal from the request information display part 205, for storing display history information, and for sending the display history information to the request information display processing part 204.

The information providing server 30 includes a providing information request receiving part 301 for receiving a signal from the request information sending part 202, a providing information search reading part 302 for receiving a signal from the providing information request receiving part 301 and searching and reading information provided by the information provider, a providing information storing part 303 for storing providing information by the information provider, and a providing information sending part 304 for sending a signal to the request information receiving part 203 of the terminal 20.

The certification server 40 includes a certification information request receiving part 401 for receiving a signal from the request information sending part 202, a certification information search reading part 402 for searching and reading a certification information providing program for displaying certification information presented by the third party certification authority, a certification information storing part 403 for storing the certification information providing program by the third party certification authority, and a certification information sending part 404 for sending a signal to the request information receiving part 203 of the terminal 20.

Next, operation of the above-mentioned system will be described.

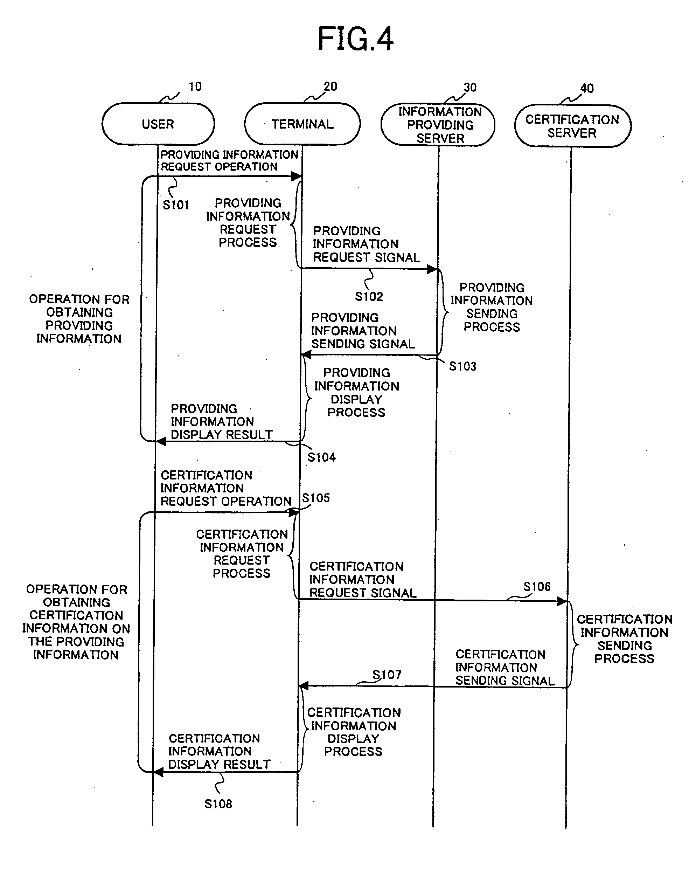

Fig.4 shows a sequence chart for explaining operations of the certification information providing system of the present invention.

Step 101) The user 10 performs a providing information request operation on the terminal 20.

Step 102) The request operation detection part 201 in the terminal 20 receives providing information request operation from the user, detects the providing information request, generates a providing information request signal, and sends the signal from the request information sending part 202 to the information providing server 30.

Step 103) The providing information receiving part 301 in the information providing server 30 receives the providing information request signal from the terminal 20, the providing information search reading part 302 searches information provided by the information provider from the providing information storing part 303. If there is providing information, a providing information presence identifier indicating presence or absence of the providing information is set to "present", and a providing information sending signal including the providing information presence identifier, a providing information location identifier and the providing information is generated. If there is no providing information, providing information presence identifier is set to "absent" and a providing information sending signal including the providing information presence identifier and a providing information location identifier is generated. Then, the signal is sent from the providing information sending part 304 to the terminal 20.

Step 104) The request information receiving part 203 in the terminal 20 obtains the providing information sending signal sent from the information providing server 30. When the providing information presence identifier indicates "present", the request information display processing part 204 displays the providing information. When the providing information presence identifier indicates "absent", the request information display processing part 204 generates a message indicating that there is no information to be provided. Then, the request information display part 205 displays providing information or the message indicating that there is no information to be provided, so that a request information display result is presented to the user 10. In addition, a providing information location identifier indicating location of the providing information is stored in the display history storing part 206, wherein the providing information location identifier corresponds to the providing information displayed on the request information display part 205.

Step 105) The user recognizes the providing information display result displayed on the request information display part 205, and performs certification information request operation for requesting certification information for the providing information.

Step 106) The request operation detecting part 201 in the terminal 20 receives the certification information request, generates a certification information request signal including the certification information location identifier indicating location of the certification information, and sends the signal to the certification server 40.

Step 107) The certification information request receiving part 401 in the certification server 40 receives the certification information request from the terminal 20, the certification information search reading part 402 searches the certification information storing part 403 for the certification information providing program on the basis of the certification information location identifier. If there is a certification information providing program, a certification information presence identifier indicating presence of the certification information is set to be "present", and a certification information sending signal including the certification information presence identifier, a certification information location identifier and the certification information providing program is generated. If there is not a certification information providing program, a certification information presence identifier indicating presence or absence of the certification information is set as "absent", and a certification information sending signal including the certification information presence identifier and a certification information location identifier is generated. Then, the signal is sent to the terminal 20.

Step 108) The request information receiving part 203 in the terminal 20 receives the certification information sending signal. When the certification information presence identifier indicates "present", and when the certification object identifier indicating an object to be certified included in the certification information providing program agrees with the newest display history information in a table stored in the display history storing part 206, the request information display processing part 204 displays the certification information on the request information display part 205 as the certification information display result. When they do not agree with each other or when the certification information presence identifier indicates "absent", not-certifying information is displayed on the request information display part 205. Further, the certification information location identifier corresponding to the certification information displayed on the request information display part 205 is stored in the display history storing part 206.

The user 10 views the certification information display result from the terminal 20, and checks the certification information.

In the above-mentioned operations, steps 101-104 corresponds to operations for obtaining providing information, and steps 105-108 corresponds to operations for obtaining certification information on the providing information.

### [First embodiment]

In the following, the first embodiment of the present invention will be described on the basis of Figs.3 and 4.

A technology used in the request information display part 205 in the terminal 20 for displaying images and text can be easily realized by using a browser and a WWW server employing the Internet technology.

The user 10 performs a requesting operation to the request operation detection part 201 and sees a display of the result of the operation through the request information display part 205.

The request operation detection part 201 in the terminal 20 detects the operation requested by the user 10, and sends a request signal to the request information sending part 202.

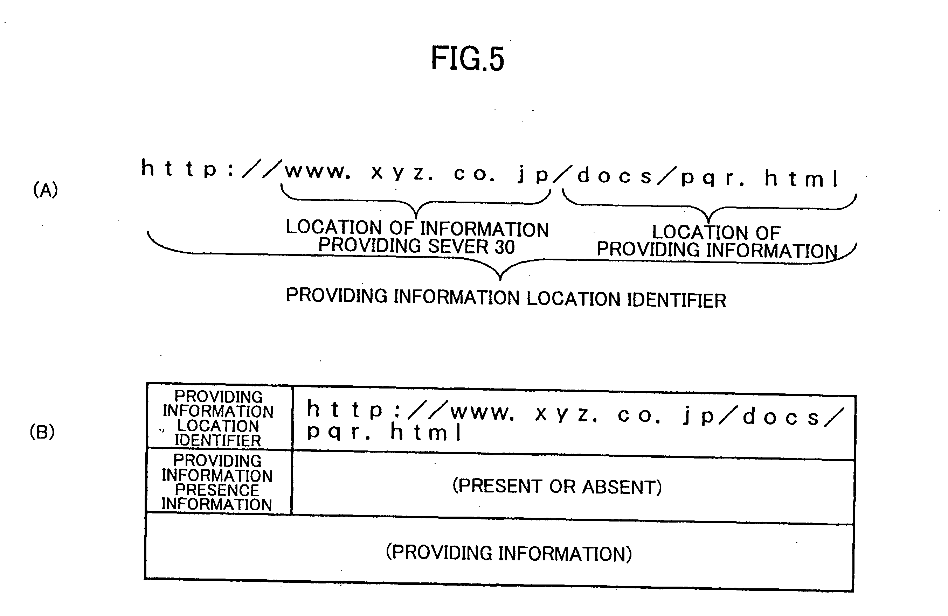

The request information sending part 202 receives the request signal from the request operation detection part 201. If this signal indicates a request for displaying providing information, the request information sending part 202 sends a signal indicating the information providing server 30, that is, the providing information location identifier (Fig.5(a)) to the providing information request receiving part 301 in the information providing server 30. Fig.5 (a) shows an example of the providing information location identifier. The providing information location identifier includes location information of the information providing server 30 and location information of the providing information. Fig.5 (b) shows an example of a providing information data packet including the providing information location identifier, the providing information presence identifier and the providing information. Data are not determined in the data packet shown in Fig.5(b) in the initial stage.

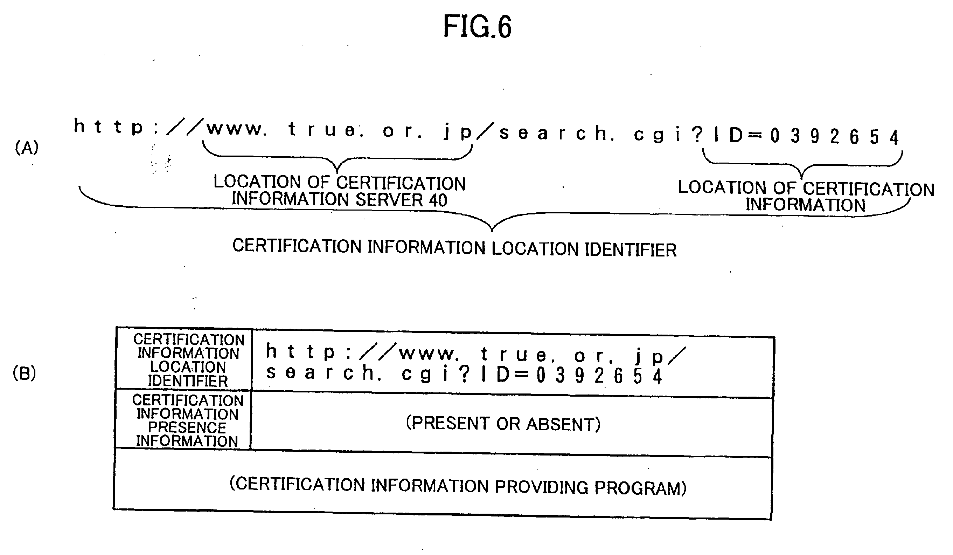

When the request signal indicates a request for displaying certification information, the request information sending part 202 sends a signal including a certification information location identifier indicating locations of the certification server 40 (Fig.6(a)) to the certification information request receiving part 401. Fig.6(a) indicates an example of the certification information location identifier. The certification information location identifier includes location information of the certification information server 40 and location information of the certification information. Fig.6 (b) shows an example of a certification information data packet including the certification information location identifier, a certification information presence identifier and the certification information providing program and the certification information. Data in the data packet in Fig.6(b) are not determined in the initial stage. The certification information providing program includes a certification object identifier for comparing with display history information stored in the terminal 20.

The providing information request receiving part 301 in the information providing server 30 receives the signal from the request information sending part 202. Then, the providing information request receiving part 301 of the information providing server 30 sends, to the providing information search reading part 302, the providing information location identifier, shown in Fig.5(a), included in the signal.

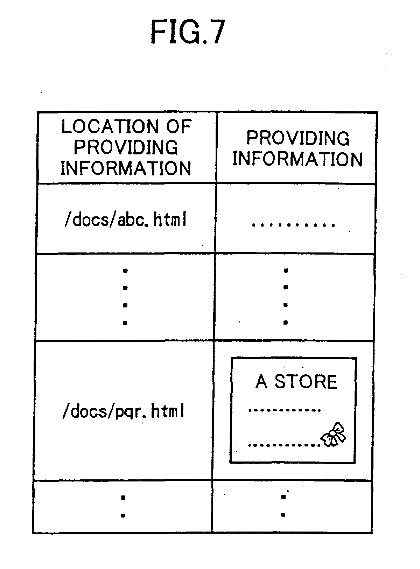

The providing information search reading part 302 receives the information from the providing information request receiving part 301. Then, the providing information search reading part 302 searches a table shown in Fig.7 for providing information corresponding to the location included in the providing information location identifier, wherein the table is stored beforehand in the providing information storing part 303. When there is providing information, "present" is set in the providing information data packet (Fig.5(b)) sent from the providing information sending part 304 to the request information receiving part 203, and the providing information search reading part 302 reads the providing information from the providing information storing part 303, sends a signal including the providing information presence identifier, the providing information location identifier and the providing information to the providing information sending part 304. When there is not providing information, "absent" is set in the providing information data packet, and the providing information search reading part 302 sends a signal including the providing information presence identifier and the providing information location identifier to the providing information sending part 304. Fig.7 shows an example of a relationship between the location of the providing information and the providing information according to the first embodiment of the present invention.

The providing information sending part 304 receives a signal from the providing information search reading part 302, and sends the signal to the request information receiving part 203. The signal is sent from the providing information sending part 304 to the request information receiving part 203 by using an address sent from the terminal 20 or by using a link between the providing information sending part 304 and the request information receiving part 203.

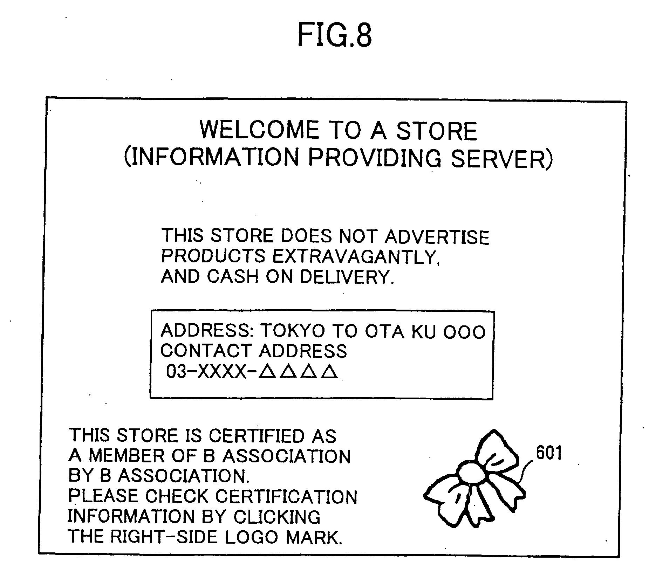

The certification information request receiving part 401 receives the signal from the request information sending part 202. Then, the certification information request receiving part 401 sends the certification information location identifier shown in Fig.6(a) included in the signal to the certification information search reading part 402. The certification information location identifier can be obtained by including the certification information location identifier in the providing information as link information and by specifying the link information, wherein the providing information is included in the providing information storing part 303 in the information providing server 30 which is indicated by the providing information location identifier requested by the user 10 via the terminal 20. That is, Fig.8 shows an example of a sending message when the providing information presence identifier indicates "present" in the first embodiment of the present invention. For example, when information shown in Fig.8 is the providing information, the information can be obtained by linking logo mark 601 with the certification information location identifier and by clicking the logo mark 601.

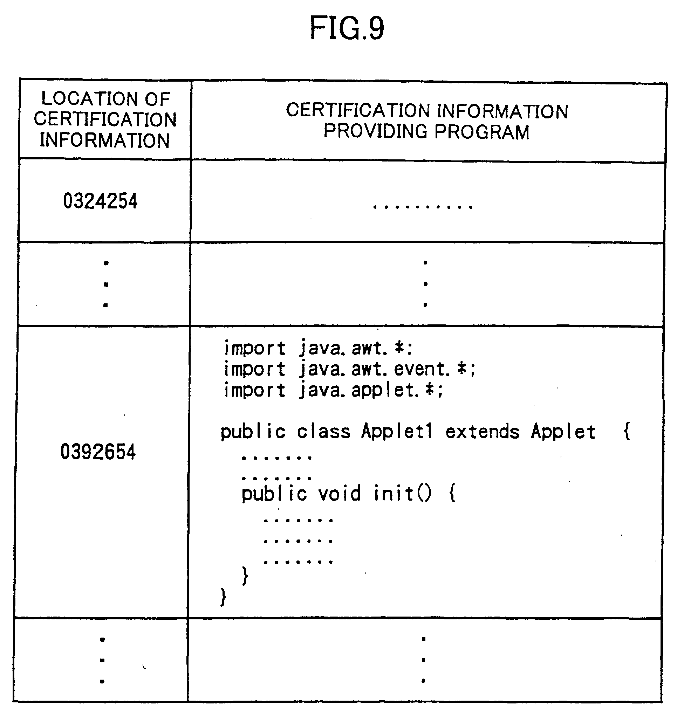

The certification information search reading part 402 receives a signal from the certification information request receiving part 401. Fig.9 shows an example of relationships between locations of the certification information and the certification information providing programs according to the first embodiment of the present invention.

The certification information search reading part 402 searches the table shown in Fig.9 for a certification information providing program corresponding to the location included in the certification information location identifier, wherein the table is stored beforehand in the certification information storing part 403. When there is a certification information providing program, "present" is set in the certification information data packet (Fig.6(b)) sent from the certification information sending part 404 to the request information receiving part 203, and the certification information search reading part 402 reads the certification information providing program, sends a signal including the certification information presence identifier, the certification information location identifier and the certification information providing program to the certification information sending part 404. When there is not a certification information providing program, "absent" is set in the certification information data packet, and the certification information search reading part 402 sends a signal including the certification information presence identifier and the certification information location identifier to the certification information sending part 404.

The certification information sending part 404 receives the signal from the certification information search reading part 402, and sends the signal to the request information receiving part 203.

The request information receiving part 203 receives the signal from the providing information sending part 304 or from the certification information sending part 404.

When the request information receiving part 203 receives a signal from the providing information sending part 304, the providing information presence identifier included in the signal is determined. When the providing information presence identifier indicates "present", the providing information presence identifier, the providing information location identifier and the providing information are extracted and sent to the providing information display processing part 204. When the providing information presence identifier indicates "absent", the providing information presence identifier and the providing information location identifier are extracted and sent to the providing information display processing part 204.

When the request information receiving part 203 receives a signal from the certification information sending part 404, the certification information presence identifier included in the signal is determined. When the certification information presence identifier indicates "present", the certification information presence identifier, a certification information location identifier and the certification information providing program are extracted and sent to the providing information display processing part 204. When the certification information presence identifier indicates "absent", the certification information presence identifier and the certification information location identifier are extracted and sent to the providing information display processing part 204.

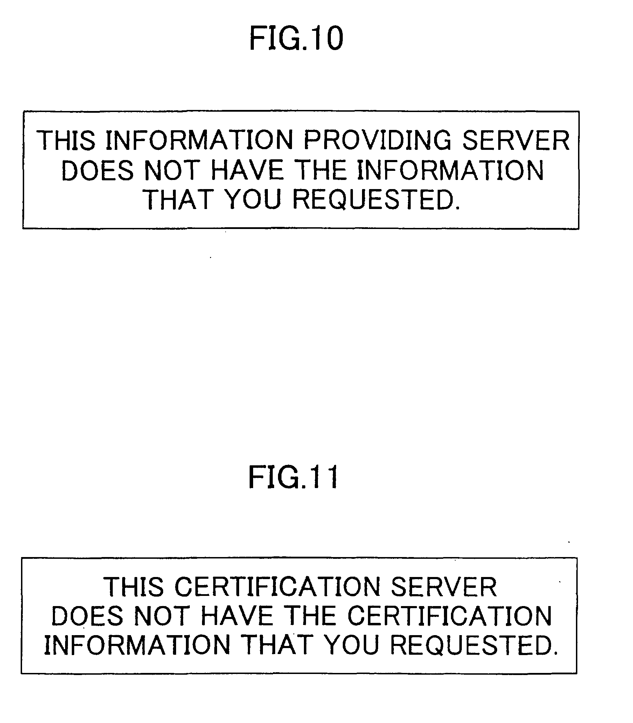

The request information display processing part 204 receives a signal from the request information receiving part 203. If this signal includes the providing information presence identifier, the providing information presence identifier is determined. Then, when the providing information presence identifier indicates "presence", the request information display processing part 204 sends the providing information and the providing information location identifier included in the signal from the request information receiving part 203 to the request information display part 205. When the providing information presence identifier indicates "absent", the request information display processing part 204 generates information shown in Fig.10 indicating that there is no providing information. Then, the request information display processing part 204 sends the information and the providing information location identifier to the request information display part 205. When the signal received from the request information receiving part 203 includes the certification information presence identifier, the certification information presence identifier is determined. When the certification information presence identifier indicates "presence", the certification information providing program included in the signal from the request information receiving part 203 is executed. Then, the result of execution and the certification information location identifier are sent to the request information display part 205. When the certification information presence identifier indicates "absent", information shown in Fig.11 is generated indicating that there is no certification information, and this information and the certification information location identifier are sent to the request information display part 205.

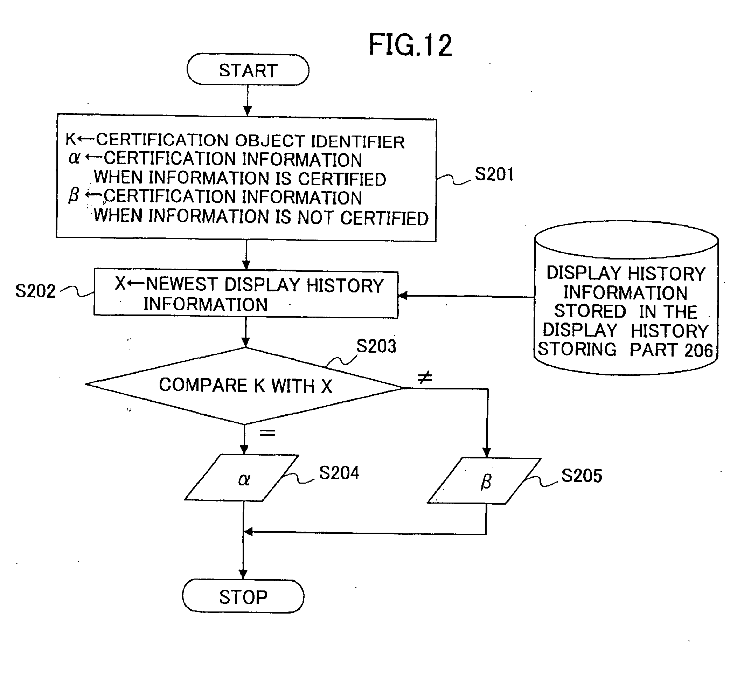

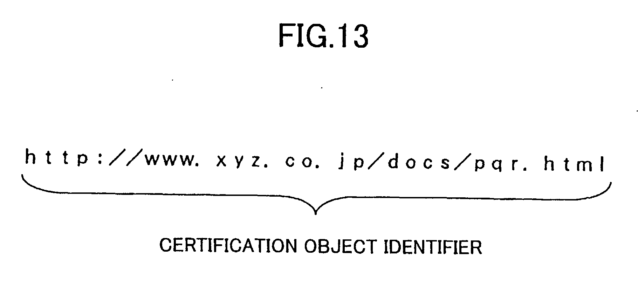

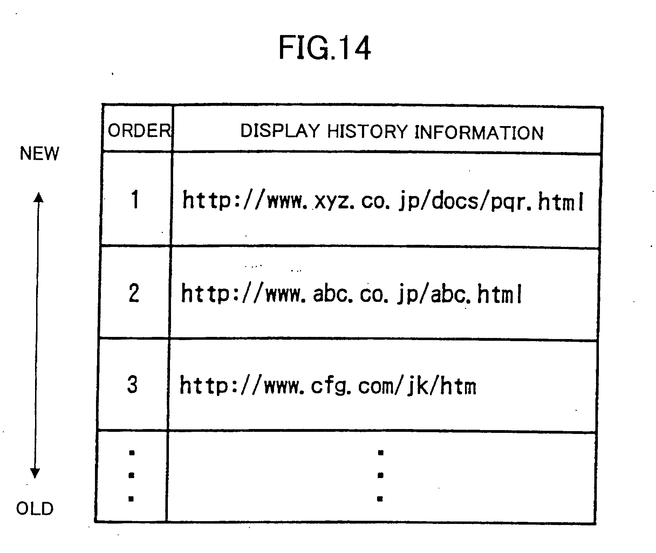

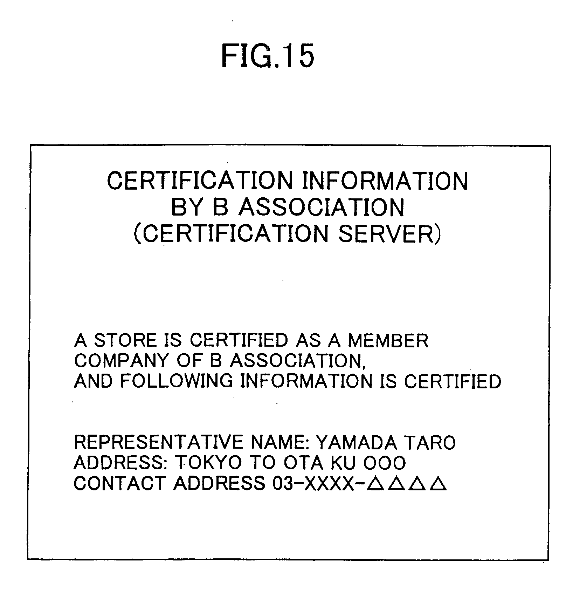

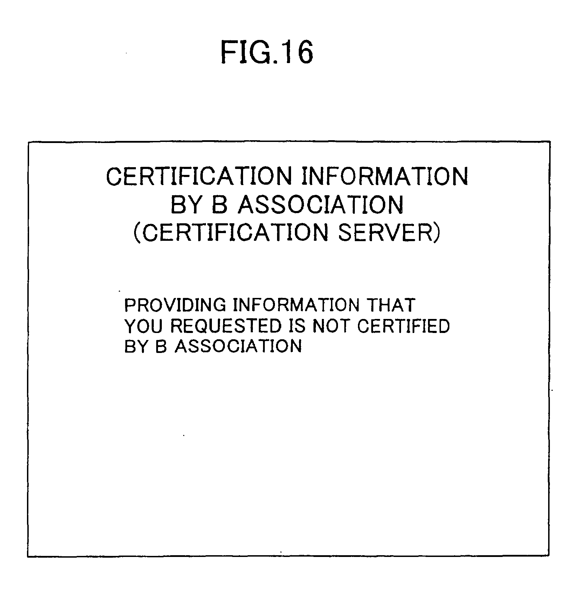

The certification information providing program executed here is stored in a table shown in Fig.9 that is stored in the certification information storing part 403. The algorithm is shown in Fig.12. Fig.12 is an algorithm of the certification information providing program according to the first embodiment of the present invention. Fig.12 shows an example of the algorithm of the certification information providing program. Fig.13 shows an example of the certification object identifier of the first embodiment of the present invention. The certification object identifier (http://www.xyz.co.jp/docs/pqr.html) shown in Fig.13 is substituted into K (step 201), wherein the certification object identifier represents the information providing server 30 and the location of the providing information to be certified, and the certification object identifier is described in the certification information providing program beforehand. Fig.14 shows an example of relationships between order of display history and display history information according to the first embodiment of the present invention. The table shown in Fig.14 stored in the display history storing part 206 is searched for newest display history information, and the value (http://www.xyz.co.jp/docs/pqr.html) is substituted into X (step 202). Next, K (http://www.xyz.co.jp/docs/pqr.html) and X (http://www.xyz.co.jp/docs/pqr.html) are compared (step 203). When they are the same, certification information shown in Fig.15 is generated showing that the information providing server is certified (step 204). When they are not the same, the certification information shown in Fig.16 is generated showing that the information providing server is not certified (step 205). In the case shown in Fig.14, since they are the same, the certification information shown in Fig.15 is generated.

Therefore, as a result of executing the algorithm of the certification information providing program shown in Fig.12, certification information α shown in Fig.15, or certification information β shown in Fig.16 is sent to the request information display part 205.

The request information display part 205 receives the signal from the request information display processing part 204. Then, the request information display part 205 displays providing information shown in Fig.8 or Fig.10 included in the signal, or, the request information display part 205 displays certification information shown in one of Figs.11, 15 and 16 to notify the user of the result. In addition, the request information display part 205 stores the providing information location identifier or the certification information location identifier in the display history storing part 206 as the newest display history information in the table shown in Fig.14.

### [Second embodiment]

Next, the second embodiment of the present invention will be described.

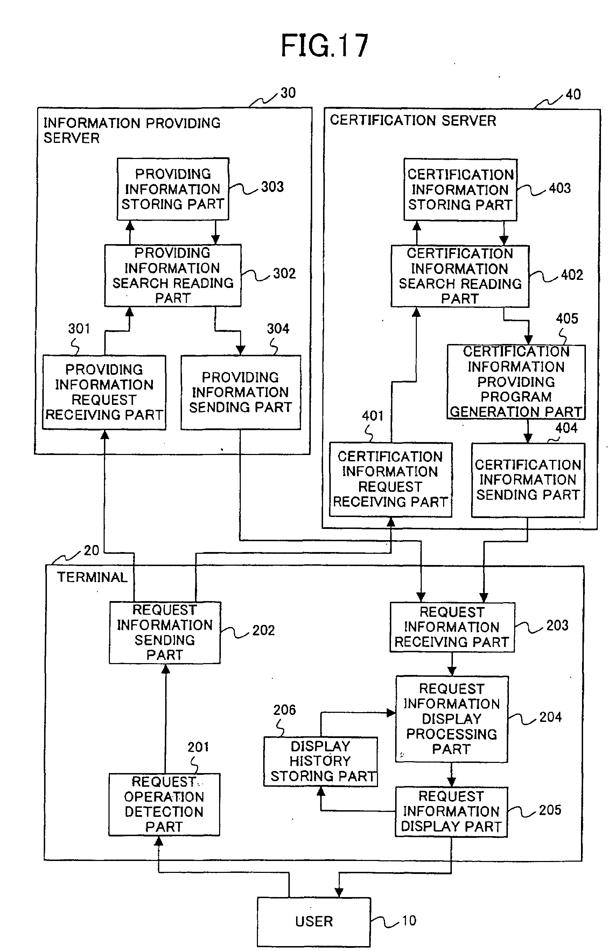

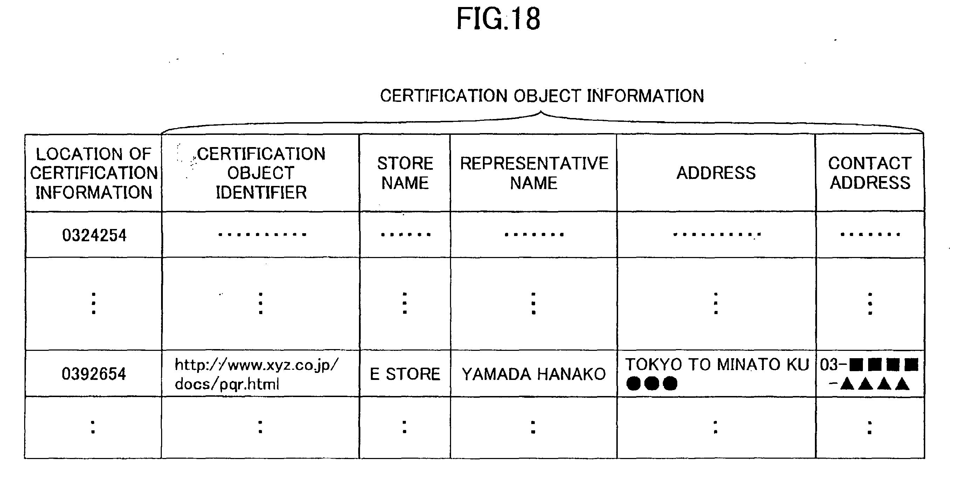

Fig.17 shows a configuration of the certification information providing system according to the second embodiment of the present invention. Fig.18 shows an example of the relationship of the location of certification information and the certification object information according to the second embodiment of the present invention.

The configuration shown in Fig.17 is an example in which the certification information storing part 403 stores certification object information shown in Fig.18 as information used for generating the certification information providing program, instead of storing the certification information program shown in Fig.9 itself. The certification information providing program is dynamically generated by using this information.

In the system shown in Fig.17, the same numerals are assigned to the same elements as those shown in Fig.3, and the explanations are omitted.

In the system shown in Fig.17, a certification information providing program generation part 405 is added to the certification server 40 shown in Fig.3.

A certification information request receiving part 401 receives a signal from the request information sending part 202, and sends the certification information location identifier shown in Fig.6(a) extracted from the signal to a certification information search reading part 402.

The certification information search reading part 402 receives a signal including the certification information location identifier from the certification information request receiving part 401. Then, the certification information search reading part 402 searches a table shown in Fig.18 stored in a certification information storing part 403 for certification object information corresponding to the location of certification information included in the certification information location identifier. When the certification object information exists, "present" is set as the certification information presence identifier and the certification object information is read. Then, a signal including the certification information presence identifier, the certification information location identifier and the certification object information is sent to a certification information providing program generation part 405. When the certification object information does not exist, "absent" is set as the certification information presence identifier is read. Then, a signal including the certification information presence identifier and the certification information location identifier is sent to the certification information providing program generation part 405.

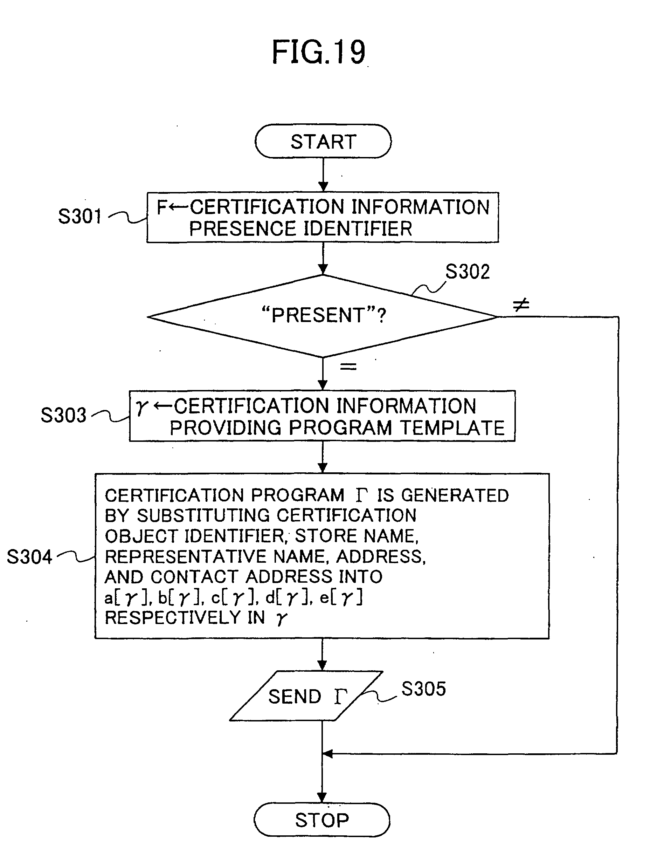

The certification information providing generation part 405 receives the signal from the certification information search reading part 402, and dynamically generates the certification information providing program by using the certification object information included in the signal. This algorithm is shown in Fig.19.

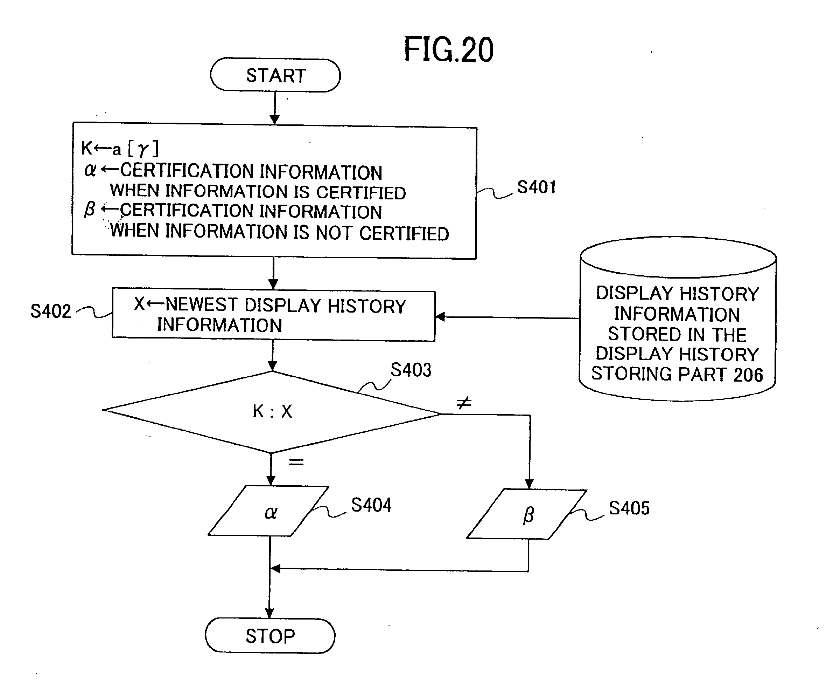

Fig.19 shows an algorithm of the certification information providing program generation part of the second embodiment. Fig.20 shows an example of a certification information providing program template according to the second embodiment of the present invention.

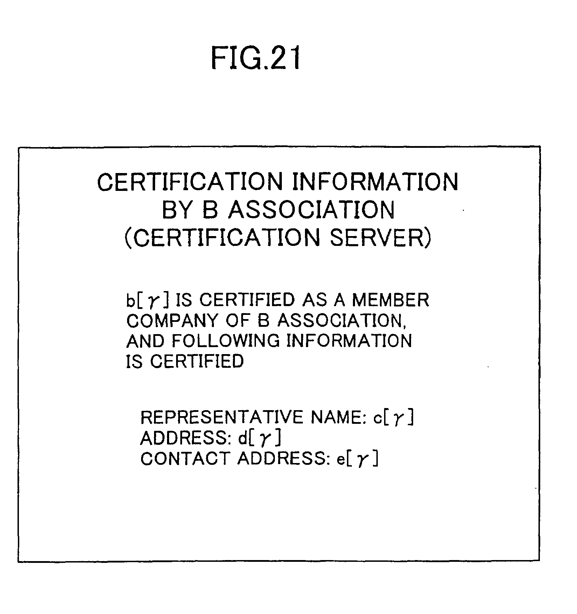

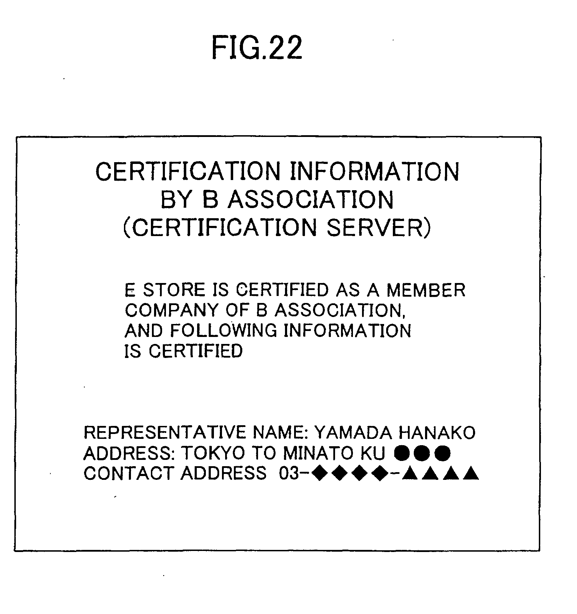

The certification information presence identifier is substituted into F (step 301). When F is "present" (step 302), a certification information providing program template γ shown in Fig.20 held by the certification information providing program generation part 405 is read (step 303). The certification object identifier included in the certification object information is substituted into a variable a[γ] in γ, a store name included in the certification object information is substituted into a variable b[γ] of the certification information template α used for certification shown in Fig.21 in γ, the name of a representative included in the certification object information is substituted into c[γ], an address included in the certification object information is substituted into d[γ], and a contact address included in the certification object information is substituted into e[y]. Then, a certification information providing program that provides α shown in Fig.22 or β shown in Fig.16 as the certification information is generated. (step 304). By the certification information providing program, α shown in Fig.22 is provided when the certification object information is certified, and, β shown in Fig.16 is provided when the certification object information is not certified. Then, the certification information presence identifier, the certification information location identifier and the generated certification information providing program are sent to the certification information sending part 404 (step 305). When the certification information presence information indicates "absent", the certification information presence identifier and the certification information location identifier are sent to the certification information sending part 404 (step 305).

The certification information sending part 404 receives a signal from the certification information search reading part 402, and sends the signal to the request information receiving part 203.

The request information receiving part 203 receives the signal from the certification information sending part 404. When the certification information presence identifier included in the signal indicates "present", the certification information presence identifier, the certification information location identifier and the certification information providing program are sent to the request information display processing part 204. When the certification information presence identifier included in the signal indicates "absent", the certification information presence identifier and the certification information location identifier are sent to the request information display processing part 204.

The request information display processing part 204 receives the signal from the request information receiving part 203, and, when the certification information presence identifier is "present", a certification information providing program is executed, wherein the certification information providing program is generated from the certification information providing program template shown in Fig.20 included in the signal from the request information receiving part 203, and a[γ] is stored in K, certification information indicating that information is certified is stored in α, and certification information indicating that information is not certified is stored in β (step 401). Then, the newest display history information stored in the display history storing part 206 is searched for, and the searched value is substituted into X (step 402). If K and the display history information X are the same (step 403), certification information (step 404) shown in Fig.22 and the certification information location identifier are sent to the request information display part 205. When they are not the same (step 403), the certification information (step 404) shown in Fig.16 and the certification information location identifier are sent to the request information display part 205. When the certification information presence information indicates "absent", information shown in Fig.11 indicating that certification information does not exist and the certification information location identifier are sent to the request information display part 205.

The request information display part 205 receives the signal from the request information display processing part 204, and displays certification information shown in one of Figs.11, 16 and 22 to notify the user 10 of the result. In addition, the request information display part 205 stores the providing information location identifier or the certification information location identifier in the display history storing part 206 as the newest display history information in the table shown in Fig.14.

In addition, for example, although each identifier shown in Figs.5, 6, 13 and 14 uses http of the Internet, the identifier is not limited to this. Any information can be used as the identifier as long as the information identifies the location of the information providing server 30, the location of providing information, the location of certification information, the location of the information providing server 30 to be certified, the location of information providing server 30 corresponding to the information displayed on the request information display part 205, the location of the certification server 40 and the location of the certification information.

Although the providing information shown in Fig.7 is described by using html, any information can be used as long as the providing information is provided to the user and the providing information is displayed.

In addition, although Java is used in Fig.9, any method can be used as long as the program is executed in the client side.

In addition, although the certification object information includes the certification object identifier, the store name, the name of representative, the address and the contact address, information in the certification object information can be determined according to the object that the certification server 40 certifies, that is, the certification object information may includes a name of a commodity and the price and the like.

In addition, in Figs.12 and 20, examples that use a template are shown. However, the method is not limited to those using a template. For example, a predetermined message can be inserted into α and β.

In the above-mentioned embodiments, the configuration is shown in Fig.3 and Fig.17. The elements shown in Fig.3 and Fig.17 can be configured by a program for each apparatus. The program may be stored in a disk apparatus, or a portable computer readable medium such as a floppy disk, a CD-ROM and the like, and the program can be installed and executed. Accordingly, the present invention can be realized easily.

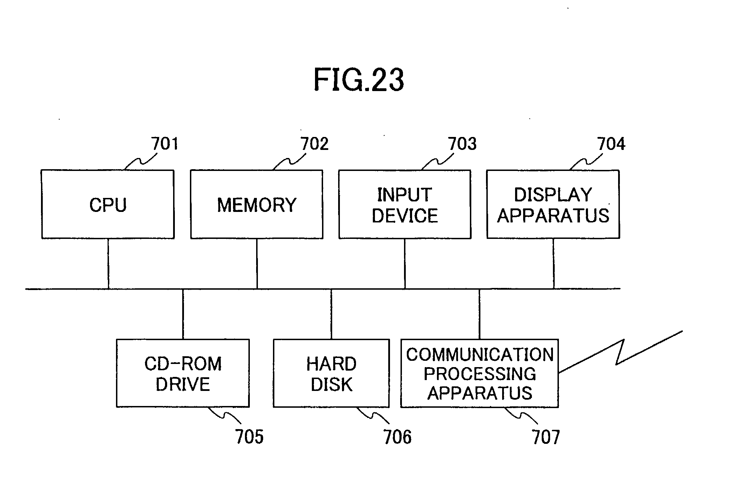

Fig.23 shows a configuration example of a computer that can be used as each apparatus. The computer includes a CPU (central processing unit) 701, a memory 702, an input device 703, a display device 704, a CD-ROM drive 705, a hard disk 706, and a communication processing apparatus 707. The CPU 701 controls the whole of the apparatus. The memory 702 stores data and programs processed by the CPU 701. The input device 703 is a keyboard, mouse and the like. The display device 704 is a device such as a display and the like. The CD-ROM drive 705 drives the CD-ROM and the like, and performs reading and writing. The hard disk 706 stores data and programs. The program of the present invention may be installed in the computer beforehand, and may be stored in the CD-ROM and loaded in the hard disk 706 via the CD-ROM drive 705. When the program is launched, a predetermined part of the program is expanded in the memory 702, and processes are performed.

As mentioned above, according to the present invention, it can be determined whether a malicious information provider abuses certification information of a valid information provider by holding display history of provided information and by checking presence or absence of certification information and location information of the certification information, and by checking whether the certification object identifier of the certification information providing program and the newest display history are the same. Thus, the certification information can be provided only for a valid information provider, so that a true sense of security can be provided.

The present invention is not limited to the specifically disclosed embodiments, and variations and modifications may be made without departing from the scope of the invention.

## Claims

1. A certification information providing method in which a third party certification authority certifies information provided by an information provider over a network that is used by an indefinite number of users, and certification information is provided to a user, said method comprising the steps of:
a terminal detecting a request operation by said user;
sending a providing information request or a certification request on the basis of detected operation information;
obtaining providing information from an information providing server that receives said providing information request, or obtaining a certification information providing program from a certification server that receives said certification request; and
displaying said providing information or information on the basis of said certification information providing program.

2. The certification information providing method as claimed in claim 1, said certification information providing method comprising the steps of:
said terminal receiving a providing information request from said user;
said terminal sending said providing information request to said information providing server of an information provider;
said information providing server searching a providing information memory means for information on the basis of said providing information request, and sending presence information or absence information of said information corresponding to said providing information request, location information of said information and said providing information to said terminal;
said terminal displaying said providing information if said terminal receives said providing information from said information providing server, and said terminal indicating that there is no information to be provided if said terminal does not receive said providing information, and said terminal storing location information of said providing information in display history information;
said terminal receiving a certification request from the user;
said terminal sending said certification request to said certification server;
said certification server searching a certification information memory means for a certification information providing program on the basis of said certification request, wherein: if said certification information providing program exists, said certification server sets a certification information presence identifier to be "present", and sends information including said certification information presence identifier, a certification information location identifier and said certification information providing program to said terminal; if said certification information providing program does not exist, said certification server sets said certification information presence identifier to be "absent", and sends information including said certification information presence identifier and said certification information location identifier to said terminal; and
wherein: if said certification information presence identifier is "present" and if certification object information in said certification information program agrees with the newest display history information that is stored, said terminal displays certification information; if said certification object information does not agree with said newest display history information, or if said certification information presence identifier is "absent", said terminal displays not-certifying information as a certification information display result.

3. The certification information providing method as claimed in claim 1 or 2, said certification information providing method comprising the steps, performed by said certification server, of:
storing, beforehand, information used for generating said certification information providing program;
generating said certification information providing program by searching said information used for generating said certification information providing program for information corresponding to said certification request; and
sending said certification information providing program to said terminal.

4. A certification information providing system in which a third party certification authority certifies information provided by an information provider over a network that is used by an indefinite number of users, and certification information is provided to a user, said system comprising:
a terminal comprising:
request detection means for detecting a request operation by said user;
request issuing means for sending a providing information request or a certification request on the basis of operation information detected by said request detection means;
information obtaining means for obtaining providing information corresponding to said providing request or a certification information providing program corresponding to said certification request; and
display control means for displaying said providing information when said information obtaining means obtains said providing information, and for displaying certification information if newest display history information and certification object information included in said certification information providing program are the same when said information obtaining means obtains said certification information providing program, wherein said newest display history information is extracted from display history information that is stored when providing information and certification information are displayed;
said certification information providing system further comprising:
an information providing server for providing information corresponding to said providing information request to said terminal; and
a certification server for providing a certification information providing program corresponding to said certification request to said terminal.

5. The certification information providing system as claimed in claim 4, said display control means comprising:
display history storing means for displaying said providing information and said certification information, and storing information indicating location of said information as display history information; and
determining means for, when said certification information providing program is obtained, displaying certification information indicating that certification object is certified only when a certification information presence identifier is "present" and newest display history information stored in said display history storing means is the same as said certification object information included in said certification information providing program.

6. The certification information providing system as claimed in claim 4, said certification server comprising:
program generation information storing means for storing, beforehand, information used for generating said certification information providing program;
program generation means for generating. said certification information providing program by searching said information used for generating said certification information providing program for information corresponding to said certification request; and
program sending means for sending said certification information providing program to said terminal.

7. A computer readable medium storing program code to be installed on a terminal for providing certification information to a user in which a third party certification authority certifies information provided by an information provider over a network that is used by an indefinite number of users, said computer readable medium comprising:
request detection program code means for detecting a request operation by said user;
request issuing program code means for sending a providing information request or a certification request on the basis of operation information detected by said request detection program code means;
information obtaining program code means for obtaining providing information corresponding to said providing request or a certification information providing program corresponding to said certification request; and
display control program code means for displaying said providing information when said information obtaining means obtains said providing information, and for displaying certification information if newest display history information and certification object information included in said certification information providing program are the same when said information obtaining means obtains said certification information providing program, wherein said newest display history information is extracted from display history information that is stored when providing information and certification information are displayed.

8. The computer readable medium as claimed in claim 7, said display control program code means comprising:
display history storing program code means for displaying said providing information and said certification information, and storing display history information corresponding to said information in memory means; and
determining program code means for, when said certification information providing program is obtained, displaying certification information indicating that certification object is certified only when a certification information presence identifier is "present" and newest display history information stored in said memory means is the same as said certification object information included in said certification information providing program.

9. A computer readable medium storing program code to be installed on a certification server for providing certification information to a user in which a third party certification authority certifies information provided by an information provider over a network that is used by an indefinite number of users, said computer readable medium comprising:
program code means for searching for a certification information providing program from certification information providing programs stored beforehand when said certification server receives a certification request from a terminal of a user;
certification information sending program code means for sending said searched certification information providing program to said terminal.

10. The computer readable medium as claimed in claim 9, further comprising:
program generation information storing program code means for storing, in memory means beforehand, information used for generating said certifications information providing program used for certifying providing information;
program generation program code means for generating said certification information providing program by searching said information used for generating said certification information providing program stored in said memory means for information corresponding to said certification request; and
program sending program code means for sending said certification information providing program to said terminal.

11. A certification server for verifying whether information provided by an information provider via a network is valid, said certification server comprising:
certification information request receiving means for receiving a certification request via said network; and
certification information sending means for searching certification information memory means for a certification information providing program on the basis of said certification request, and sending said certification information providing program to said network when said certification information providing program exists.
